# EUROPEAN PATENT APPLICATION

(11) **EP 4 697 621 A1**
(43) Date of publication of application: **18.02.2026**
(21) Application number: 24810187.5
(22) Date of filing: 30.04.2024
(51) Int. Cl.: H04B 7/185, G01S 19/05

(54) **SATELLITE COMMUNICATION METHODS, AND APPARATUS**

(30) Priority: 19.05.2023 CN 202310576815; 27.09.2023 CN 202311270996
(71) Applicant: Huawei Technologies Co., Ltd., Shenzhen, Guangdong 518129 (CN)
(72) Inventor: CHEN, Ying, Shenzhen, Guangdong 518129 (CN); YANG, Ruonan, Shenzhen, Guangdong 518129 (CN); WANG, Jun, Shenzhen, Guangdong 518129 (CN)
(74) Representative: Gill Jennings & Every LLP
(86) International application number: PCT/CN2024/090951
(87) International publication number: WO 2024/239940

(57) **Abstract**

A satellite communication method and an apparatus are provided, and are applied to the field of communication technologies. The method includes: A first communication apparatus determines GNSS second validity duration of the first communication apparatus in a global navigation satellite system (global navigation satellite system, GNSS) measurement gap, and then reports duration information indicating the GNSS second validity duration. Correspondingly, a second communication apparatus receives the duration information, and determines the GNSS second validity duration based on the duration information. The GNSS second validity duration may be determined based on a reference time point, and the reference time point may be included in the GNSS measurement gap. According to the method, duration of communication between the first communication apparatus and the second communication apparatus can be increased.

## Description

This application claims priorities to Chinese Patent Application No. 202310576815.3, filed with the China National Intellectual Property Administration on May 19, 2023 and entitled "SATELLITE COMMUNICATION METHOD AND APPARATUS", and to Chinese Patent Application No. 202311270996.3, filed with the China National Intellectual Property Administration on September 27, 2023 and entitled "SATELLITE COMMUNICATION METHOD AND APPARATUS", both of which are incorporated herein by reference in their entireties.

### TECHNICAL FIELD

This application relates to the field of communication technologies, and in particular, to a satellite communication method and an apparatus.

### BACKGROUND

In comparison with terrestrial communication, satellite communication has unique advantages, for example, can provide a wider coverage area, and a satellite base station is not vulnerable to natural disasters or external forces. The satellite communication can be introduced to provide communication services for some areas that cannot be covered by terrestrial communication networks, such as oceans and forests; communication reliability is enhanced, for example, it is ensured that airplanes, trains, and users on these transportation vehicles obtain better communication services; and more data transmission resources are provided for communication, to improve network rates. Therefore, supporting both the terrestrial communication and the satellite communication has great benefits in terms of wide coverage, reliability, multi-connection, and high throughput, and the like.

Currently, the satellite communication has been introduced in the 3rd generation partnership project (3rd generation partnership project, 3GPP), is used as a communication scenario of 5th generation (5th generation, 5G) communication, and is referred to as a non-terrestrial network (non-terrestrial network, NTN). The NTN can not only support various 5G terminals, but also support terminals of an internet of things (internet of things, IoT) type, and the like. A most significant feature of the satellite communication is high mobility and a high communication delay. Therefore, different from the terrestrial communication, the satellite communication has a feature that based on uplink synchronization, a terminal further needs to implement synchronization based on information such as a global navigation satellite system (global navigation satellite system, GNSS) or an ephemeris. For example, after reporting GNSS information, the terminal may remain in a connected state in specific validity duration, and the terminal enters an idle state after the GNSS expires.

However, in the foregoing method, the terminal continuously initiates random access to enter the connected state and exit the connected state, and consequently the terminal cannot perform long-time continuous communication.

### SUMMARY

Embodiments of this application provide a satellite communication method and an apparatus, to effectively increase communication duration of a terminal device.

According to a first aspect, an embodiment of this application provides a satellite communication method. The method is applied to a first communication apparatus. The first communication apparatus herein may be a terminal device, or may be a processor, a module, a chip, a chip system, or the like that is in the terminal device and that implements the method. The method includes:
determining second validity duration of a GNSS of the first communication apparatus; and reporting duration information, where the duration information indicates the GNSS second validity duration, the GNSS second validity duration is determined based on a reference time point, and the reference time point is included in a GNSS measurement gap, or the reference time point is after the GNSS measurement gap.

In this embodiment of this application, the first communication apparatus determines the GNSS second validity duration based on the reference time point, to report the GNSS second validity duration, so that the first communication apparatus can report GNSS validity duration in a GNSS validity period, it is ensured that the first communication apparatus can continue communicating with a second communication apparatus in the GNSS validity period, and long-time communication is implemented.

With reference to the first aspect, in a possible implementation, the determining the GNSS second validity duration of the first communication apparatus includes: determining GNSS first validity duration of the first communication apparatus in the GNSS measurement gap, and determining the GNSS second validity duration based on the GNSS first validity duration and the reference time point, where the GNSS second validity duration is less than the GNSS first validity duration.

With reference to the first aspect, in a possible implementation, the determining the GNSS second validity duration of the first communication apparatus includes: receiving trigger information, and determining the GNSS second validity duration of the first communication apparatus in the GNSS measurement gap based on the trigger information.

According to a second aspect, an embodiment of this application provides a satellite communication method. The method is applied to a second communication apparatus. The second communication apparatus herein may be a network device, or may be a processor, a module, a chip, or a chip system that is in the network device and that implements the method. The method includes:
receiving duration information, where the duration information indicates global navigation satellite system GNSS second validity duration of a first communication apparatus, the GNSS second validity duration is determined based on a reference time point, and the reference time point is included in a GNSS measurement gap, or the reference time point is after the GNSS measurement gap; and determining the GNSS second validity duration based on the duration information.

With reference to the second aspect, in a possible implementation, before the receiving the duration information, the method further includes: sending trigger information based on GNSS second validity duration that is most recently indicated by the first communication apparatus by using the duration information.

With reference to the first aspect or the second aspect, in a possible implementation, the GNSS second validity duration is determined based on GNSS first validity duration and the reference time point, and the GNSS second validity duration is less than the GNSS first validity duration.

With reference to the first aspect or the second aspect, in a possible implementation, the GNSS second validity duration is determined based on the reference time point and an end time point of the GNSS measurement gap.

With reference to the first aspect or the second aspect, in a possible implementation, the GNSS second validity duration is determined based on the GNSS first validity duration, the reference time point, and an end time point of the GNSS measurement gap.

With reference to the first aspect or the second aspect, in a possible implementation, the GNSS second validity duration T satisfies the following condition: T=T0-T1. T0 represents the GNSS first validity duration, and T1 represents duration between the reference time point and the end time point of the GNSS measurement gap.

With reference to the first aspect or the second aspect, in a possible implementation, the duration information includes a difference between the GNSS second validity duration and GNSS third validity duration, an index of the GNSS second validity duration, or an index of a difference between the GNSS second validity duration and GNSS third validity duration.

With reference to the first aspect or the second aspect, in a possible implementation, the GNSS third validity duration includes GNSS initial validity duration, or GNSS second validity duration that is most recently indicated by using indication information.

With reference to the first aspect or the second aspect, in a possible implementation, the reference time point is a time point at which the first communication apparatus completes GNSS measurement in the GNSS measurement gap, or an end time point of the GNSS measurement gap.

According to a third aspect, an embodiment of this application provides a first communication apparatus, configured to perform the method according to any one of the first aspect or the possible implementations of the first aspect. The first communication apparatus includes units that perform the method according to any one of the first aspect or the possible implementations of the first aspect.

For example, the first communication apparatus may be a terminal device, a chip, or a functional module, and the chip or the functional module may be used in the terminal device or the like.

According to a fourth aspect, an embodiment of this application provides a second communication apparatus, configured to perform the method according to any one of the second aspect or the possible implementations of the second aspect. The second communication apparatus includes units that perform the method according to any one of the second aspect or the possible implementations of the second aspect.

For example, the second communication apparatus may be a network device, a chip, or a functional module, and the chip or the functional module may be used in the network device or the like.

According to a fifth aspect, an embodiment of this application provides a first communication apparatus. The first communication apparatus includes a processor, configured to perform the method according to any one of the first aspect or the possible implementations of the first aspect. Alternatively, the processor is configured to execute a program stored in a memory. When the program is executed, the method according to any one of the first aspect or the possible implementations of the first aspect is performed.

In a possible implementation, the memory is located outside the first communication apparatus.

In a possible implementation, the memory is located inside the first communication apparatus.

In this embodiment of this application, the processor and the memory may alternatively be integrated into one device. In other words, the processor and the memory may alternatively be integrated together. For example, the first communication apparatus may be a chip.

In a possible implementation, the first communication apparatus further includes a transceiver. The transceiver is configured to receive a signal or send a signal. For example, the transceiver may be further configured to send duration information. For example, the transceiver may be further configured to receive trigger information and the like. For example, the first communication apparatus may be a terminal device.

According to a sixth aspect, an embodiment of this application provides a second communication apparatus. The second communication apparatus includes a processor, configured to perform the method according to any one of the second aspect or the possible implementations of the second aspect. Alternatively, the processor is configured to execute a program stored in a memory. When the program is executed, the method according to any one of the second aspect or the possible implementations of the second aspect is performed.

In a possible implementation, the memory is located outside the second communication apparatus.

In a possible implementation, the memory is located inside the second communication apparatus.

In this embodiment of this application, the processor and the memory may alternatively be integrated into one device. In other words, the processor and the memory may alternatively be integrated together. For example, the second communication apparatus may be a chip.

In a possible implementation, the second communication apparatus further includes a transceiver. The transceiver is configured to receive a signal or send a signal. For example, the transceiver may be configured to receive duration information. For example, the transceiver may be further configured to send trigger information and the like. For example, the second communication apparatus may be a network device.

According to a seventh aspect, an embodiment of this application provides a first communication apparatus. The first communication apparatus includes a logic circuit and an interface, the logic circuit is coupled to the interface, the interface is configured to input and/or output information, and the logic circuit is configured to perform the method according to any one of the first aspect or the possible implementations. That the interface is configured to input the information may include: The interface is configured to input trigger information. That the interface is configured to output the information may include: The interface is configured to output duration information and the like.

For example, the logic circuit is configured to determine GNSS second validity duration.

According to an eighth aspect, an embodiment of this application provides a second communication apparatus. The second communication apparatus includes a logic circuit and an interface, the logic circuit is coupled to the interface, the interface is configured to input and/or output information, and the logic circuit is configured to perform the method according to any one of the second aspect or the possible implementations. That the interface is configured to input the information includes: The interface is configured to input duration information. That the interface is configured to output the information includes: The interface is configured to output trigger information.

For example, the logic circuit is configured to determine GNSS second validity duration.

According to a ninth aspect, an embodiment of this application provides a computer-readable storage medium. The computer-readable storage medium is configured to store a computer program. When the computer program is run on a computer, the method according to any one of the first aspect, the second aspect, or the possible implementations is performed.

According to a tenth aspect, an embodiment of this application provides a computer program product. The computer program product includes a computer program or computer code. When the computer program or the computer code is run on a computer, the method according to any one of the first aspect, the second aspect, or the possible implementations is performed.

According to an eleventh aspect, an embodiment of this application provides a computer program. When the computer program is run on a computer, the method according to any one of the first aspect, the second aspect, or the possible implementations is performed.

According to a twelfth aspect, an embodiment of this application provides a communication system. The communication system includes a first communication apparatus and a second communication apparatus, the first communication apparatus is configured to perform the method according to any one of the first aspect or the possible implementations of the first aspect, and the second communication apparatus is configured to perform the method according to any one of the second aspect or the possible implementations of the second aspect.

### BRIEF DESCRIPTION OF DRAWINGS

FIG. 1 is a diagram of an architecture of a communication system according to an embodiment of this application;
FIG. 2a is a diagram of a satellite communication system in a transparent transmission scenario according to an embodiment of this application;
FIG. 2b and FIG. 2c are diagrams of a satellite communication system in a regeneration scenario according to an embodiment of this application;
FIG. 3 is a schematic flowchart of a satellite communication method according to an embodiment of this application;
FIG. 4a and FIG. 4b are diagrams of a relationship between GNSS first validity duration, GNSS second validity duration, and a reference time point according to an embodiment of this application;
FIG. 5a and FIG. 5b are diagrams of a relationship between GNSS first validity duration, GNSS second validity duration, and a reference time point according to an embodiment of this application; and
FIG. 6 to FIG. 8 each are a diagram of a structure of a communication apparatus according to an embodiment of this application.

### DESCRIPTION OF EMBODIMENTS

For ease of understanding technical solutions in this application, the following further describes this application with reference to accompanying drawings.

The terms "first", "second", and the like in the specification, claims, and accompanying drawings of this application are merely used to distinguish between different objects, and are not used to describe a specific order. In addition, the terms "include" and "have" and any variant thereof are intended to cover a non-exclusive inclusion. For example, a process, method, system, product, device, or the like that includes a series of steps or units is not limited to the listed steps or units, but optionally further includes unlisted steps, units, or the like, or optionally further includes other steps or units inherent to the process, method, product, device, or the like.

"Embodiments" mentioned in this specification mean that a particular feature, structure, or characteristic described with reference to embodiments may be included in at least one embodiment of this application. The phrase shown in various locations in the specification does not necessarily mean a same embodiment, and is not an independent or alternative embodiment exclusive from another embodiment. It may be understood explicitly and implicitly by a person skilled in the art that embodiments described in the specification may be combined with another embodiment.

In this application, "at least one (item)" means one or more, "a plurality of" means two or more, "at least two (items)" means two or three or more, and "and/or" is used to describe an association relationship between associated objects, and indicates that three relationships may exist. For example, "A and/or B" may indicate the following three cases: Only A exists, only B exists, and both A and B exist, where A and B may be singular or plural. "Or" indicates that two relationships may exist, for example, only A exists and only B exists. When A and B are not mutually exclusive, it may indicate that three relationships exist, for example, only A exists, only B exists, and both A and B exist. The character "/" generally indicates an "or" relationship between the associated objects. "At least one of the following items (pieces)" or a similar expression thereof means any combination of these items. For example, at least one item (piece) of a, b, or c may indicate: a, b, c, "a and b", "a and c", "b and c", or "a, b, and c".

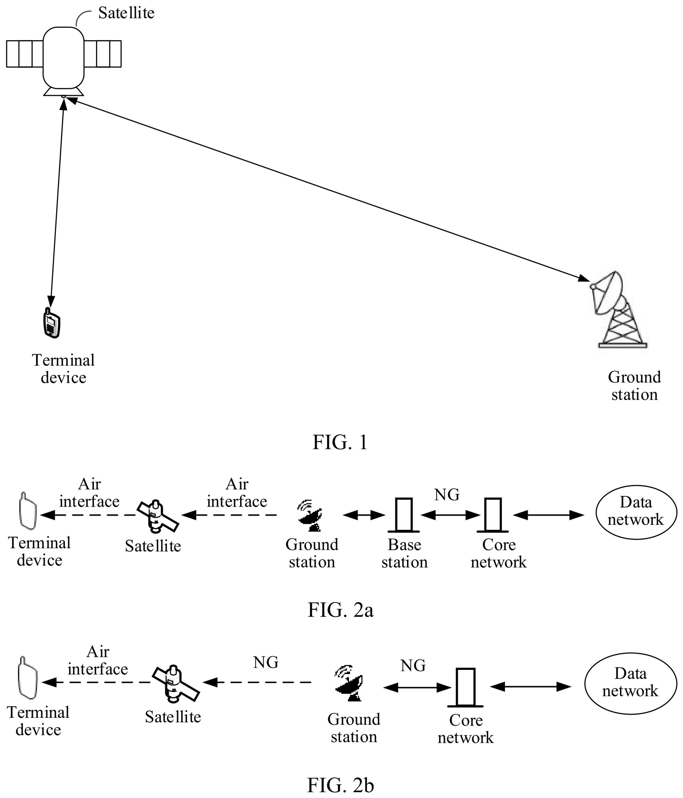

The method provided in embodiments of this application may be applied to a non-terrestrial network (non-terrestrial network, NTN) communication system. As shown in FIG. 1, the communication system may include a terminal device, a satellite, and a ground station (which may also be referred to as a gateway or a gateway station). It may be understood that FIG. 1 shows only one satellite and one ground station. In actual use, an architecture with a plurality of satellites and/or a plurality of ground stations may be used based on a requirement. Each satellite may provide a service for one or more terminal devices, each satellite may correspond to one or more ground stations, each ground station may correspond to one or more satellites, and the like. This is not specifically limited in embodiments of this application. The method provided in embodiments of this application may be applied to an internet of things (internet of things, IoT) system, an internet of vehicles (Vehicle to X, V2X), or a narrowband internet of things (narrowband internet of things, NB-IoT) system. For another example, the method may be applied to an LTE frequency division duplex (frequency division duplex, FDD) system, LTE time division duplex (time division duplex, TDD), a long term evolution (long term evolution, LTE) system, a 5th generation (5th generation, 5G) communication system, a 6th generation (6th generation, 6G) communication system, or a future communication system. This is not specifically limited in embodiments of this application.

The terminal device is an apparatus having a wireless transceiver function. The terminal device may communicate with an access network device (or may be referred to as an access device) in a radio access network (radio access network, RAN). The terminal device may also be referred to as user equipment (user equipment, UE), an access terminal, a terminal (terminal), a subscriber unit (subscriber unit), a subscriber station, a mobile station, a remote station, a remote terminal, a mobile device, a user terminal, a user agent, a user apparatus, or the like. In a possible implementation, the terminal device may be deployed on land, including an indoor or outdoor terminal device, and a handheld or vehicle-mounted terminal device; or may be deployed on water (for example, on a ship). In a possible implementation, the terminal device may be a handheld device, a vehicle-mounted device, a wearable device, a sensor, a terminal in an internet of things, a terminal in the internet of vehicles, an uncrewed aerial vehicle, a terminal device in any form in a 5th generation (5th generation, 5G) network or a future network, or the like that has a wireless communication function. This is not limited in embodiments of this application. For example, the terminal devices may further communicate with each other through device to device (device to device, D2D), machine to machine (machine to machine, M2M), or the like. The terminal device shown in embodiments of this application may alternatively be a device in the internet of things (internet of things, IoT). An IoT network may include, for example, the internet of vehicles. Communication manners in an internet of vehicles system are collectively referred to as vehicle to X (vehicle to X, V2X, where X may represent everything). For example, the V2X may include: vehicle to vehicle (vehicle to vehicle, V2V) communication, vehicle to infrastructure (vehicle to infrastructure, V2I) communication, vehicle to pedestrian (vehicle to pedestrian, V2P) communication, or vehicle to network (vehicle to network, V2N) communication.

The ground station may be configured to connect the satellite to a base station, or the satellite to a core network. The satellite may provide a wireless access service for the terminal device, schedule a radio resource to a terminal device that performs access, and provide a reliable wireless transmission protocol, a data encryption protocol, and the like. In an example, the satellite may use an artificial earth satellite, a high-altitude aircraft, and the like as base stations for wireless communication, for example, an evolved NodeB (evolved NodeB, eNB) and a next generation NodeB (next generation NodeB, gNB). In another example, the satellite may alternatively be used as a relay of these base stations, and transparently transmit signals of these base stations to the terminal device.

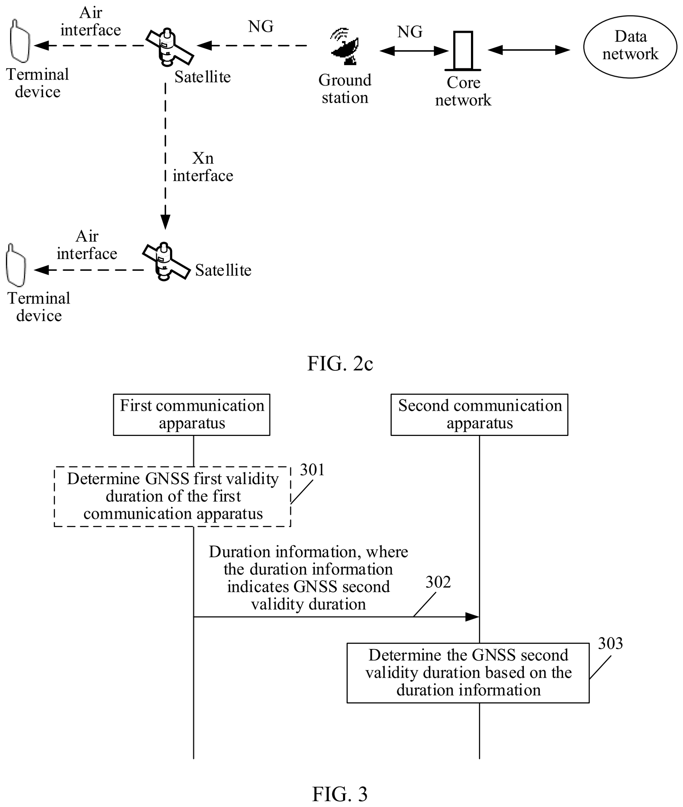

Therefore, in some implementations of this application, for example, in a satellite transparent transmission scenario, a network device may be a base station (which may also be referred to as a terrestrial base station) shown in FIG. 1. FIG. 2a is a diagram of a satellite communication system in a transparent transmission scenario according to an embodiment of this application. For example, a terminal device may access a network through air interfaces (where the air interfaces may be various types of air interfaces, for example, 5G air interfaces), and the network device may be deployed on a terrestrial base station. A satellite is connected to a ground station through a radio link. The ground station and the terrestrial base station are connected to a core network in a wired or wireless manner. A radio link may exist between satellites. In the system shown in FIG. 2a, the satellite may have a transparent transmission forwarding function. In some other implementations of this application, for example, in a satellite regeneration scenario, a network device may be the satellite shown in FIG. 1. FIG. 2b is a diagram of a satellite communication system in a regeneration scenario according to an embodiment of this application. For example, a terminal device may access a network through air interfaces (where the air interfaces may be various types of air interfaces, for example, 5G air interfaces), and the network device may be deployed on the satellite (for example, in a regeneration mode of the satellite). For example, a base station or a part of functions of the base station are deployed on the satellite, and signaling exchange and user data transmission between base stations may be completed between satellites, as shown in FIG. 2c.

For example, network elements and interfaces between the network elements in FIG. 2a to FIG. 2c may be shown as follows:
The terminal device may access a satellite network through the air interface and initiate services such as a call and internet access. The base station may be configured to provide a wireless access service, schedule a radio resource to a terminal device that performs access, and provide a reliable wireless transmission protocol, a data encryption protocol, and the like. The ground station may be configured to be responsible for forwarding signaling and service data between the satellite and the core network. The core network may be used for user access control, mobility management, session management, user security authentication, charging, or the like. The core network may include a plurality of functional units, for example, function entities including a control plane and a data plane. For example, the core network shown in FIG. 2a to FIG. 2c may include an access and mobility management function (access and mobility management function, AMF), a session management function (session management function, SMF), a user plane function (user plane function, UPF), and the like. For example, the AMF may be used to be responsible for user access management, security authentication, mobility management, and the like. The UPF may be used to be responsible for managing user plane data transmission, traffic statistics collection, and the like. The air interface shown in FIG. 2a to FIG. 2c may be understood as a radio link between a terminal and the base station, or a radio link between the satellite and the ground station. An Xn interface may be understood as an interface between the base stations, and is mainly configured to exchange signaling such as handover signaling. An NG interface may be used as an interface between the base station and the core network, and is configured to exchange signaling such as non-access stratum (non-access stratum, NAS) signaling of the core network and service data of a user. In systems using different radio access technologies, names of devices having a function of the base station may be different, and are not shown one by one in embodiments of this application.

The satellite may be a geostationary earth orbit (geostationary earth orbit, GEO) satellite, a medium earth orbit (medium earth orbit, MEO) satellite or a low earth orbit (low earth orbit, LEO) satellite in a non-geostationary earth orbit (non-geostationary earth orbit, NGEO), a high altitude communication platform (high altitude platform station, HAPS), or the like. A specific type of the satellite is not limited in embodiments of this application.

In some deployments of the network device, the network device may include a central unit (central unit, CU) and a distributed unit (distributed unit, DU). In some other deployments of the network device, a CU may be further divided into a CU-control plane (control plane, CP) and a CU-user plane (user plane, UP). In still some other deployments of the network device, the network device may alternatively be of an open radio access network (open radio access network, ORAN) architecture or the like. A specific deployment manner of the network device is not limited in embodiments of this application. For example, when the network device is of the ORAN architecture, the network device shown in embodiments of this application may be an access network device, a functional module, or the like in an ORAN. In an ORAN system, the CU may also be referred to as an open (open, O)-CU, the DU may also be referred to as an O-DU, the CU-CP may also be referred to as an O-CU-CP, the CU-UP may also be referred to as an O-CU-UP, and the like. Deployment manners of the network device listed herein are merely examples. With evolution of a standard technology, the network device may be deployed in another manner.

The network architecture and the service scenario described in embodiments of this application are intended to describe the technical solutions in embodiments of this application more clearly, and do not constitute a limitation on the technical solutions provided in embodiments of this application. A person of ordinary skill in the art may know that: With evolution of the network architecture and emergence of new service scenarios, the technical solutions and the network architecture provided in embodiments of this application are also applicable to similar technical problems.

Currently, there is a short-time connection communication method. In the method, the terminal device initiates random access, and exits a connected state after completing sending of uplink data. In this process, GNSS information obtained by the terminal device before the random access is always valid. In other words, the GNSS information is always valid before the terminal device exits the RRC connected state. Even if the terminal device moves, a GNSS deviation caused by the movement can also meet a synchronization requirement. For an IoT-type terminal device, because an IoT service has a feature of periodic transmission of a short packet, the foregoing short-time connection communication method may be effectively applicable to a terminal device having a feature of periodic transmission of a short packet.

However, the GNSS information obtained by the terminal device in the foregoing method has specific validity duration (validity duration). After the GNSS information expires, the terminal device cannot continue ensuring a connection, and needs to exit the connected state and enter an idle state. The terminal device performs random access for a plurality of times to enter the connected state and exit the connected state, causing excessively high signaling overheads. For example, the validity duration may be duration determined by the terminal device based on information such as a movement speed of the terminal device, a relative position relationship between the terminal device and the satellite (for example, in a central area or an edge area covered by the satellite), or a relative speed between the terminal device and the satellite, and then is reported by the terminal device to the network device.

In view of this, embodiments of this application provide a satellite communication method and an apparatus, to increase communication duration of the terminal device (or referred to as increasing duration in which the terminal device is in the connected state) on a basis of implementing uplink synchronization by the terminal device, so that the terminal device can implement long-time communication, and in addition, signaling overheads caused by the terminal device by continuously entering the connected state and exiting the connected state can be avoided, thereby reducing signaling overheads.

In a satellite communication method (as shown in FIG. 3) shown below, a first communication apparatus may be a terminal device, a chip disposed in the terminal device, or a functional module in the terminal device, and a second communication apparatus may be a network device, a chip disposed in the network device, or a functional module in the network device. As shown above, the network device may include the access network device, the module, or the like in the O-RAN architecture. For specific descriptions of the terminal device and the network device, refer to FIG. 1 and FIG. 2a to FIG. 2c. Details are not described herein again. For ease of description, in embodiments of this application, the terminal device and the network device may be used as examples for description in specific examples, but should not be understood as a limitation on embodiments of this application.

FIG. 3 is a schematic flowchart of a satellite communication method according to an embodiment of this application. As shown in FIG. 3, the method includes the following steps.

In a possible implementation, the method shown in FIG. 3 may include step 301.

301: A first communication apparatus determines GNSS first validity duration of the first communication apparatus in a GNSS measurement gap.

The GNSS measurement gap (GNSS measurement gap) may be understood as time used for GNSS measurement, or duration used for GNSS measurement. For example, the GNSS measurement gap may be determined based on a start time point and duration.

GNSS validity duration may be understood as a GNSS validity period, GNSS valid duration, or the like. The GNSS validity duration may indicate validity duration of GNSS information of the first communication apparatus. For example, the GNSS first validity duration may also be referred to as a GNSS first validity period, and GNSS second validity duration may also be referred to as a GNSS second validity period, GNSS remaining validity duration (remaining validity duration), or GNSS differential validity duration. Specific names of the GNSS first validity duration and the GNSS second validity duration are not limited in this embodiment of this application. For example, the GNSS first validity duration may be at a 100-second level, a minute level, or an hour level. This is not limited in this embodiment of this application. For example, the GNSS first validity duration may be any one of the following {10s, 20s, 30s, 40s, 50s, 60s, 5 min, 10 min, 15 min, 20 min, 25 min, 30 min, 60 min, 90 min, 120 min, infinity (infinity) }, where min indicates a minute, and s indicates a second. For a terminal device that does not move, GNSS information of the terminal device may be understood as always valid. Therefore, the GNSS validity duration may be understood as infinity. A specific value of the GNSS first validity duration is not limited in this embodiment of this application.

For example, that the first communication apparatus determines the GNSS first validity duration in the GNSS measurement gap may include: The first communication apparatus performs GNSS measurement in the GNSS measurement gap, and determines the GNSS first validity duration after completing GNSS measurement in the GNSS measurement gap. The GNSS measurement is a process of performing positioning based on a signal of a navigation satellite to obtain geographical position information. For example, the obtained geographical position information may be GNSS information, and the GNSS information may indicate information related to a geographical position of the terminal device, for example, coordinates X, Y, and Z, or information such as a longitude, a latitude, and an altitude. When obtaining the GNSS information, the first communication apparatus may obtain the validity duration of the GNSS information, for example, the GNSS first validity duration, based on a position relationship or a speed relationship between the first communication apparatus and the satellite, or the like. The position relationship between the first communication apparatus and the satellite may include that the first communication apparatus is located in a central area or an edge area of the satellite, or an orbital altitude, an elevation angle, or the like of the satellite. The speed relationship between the first communication apparatus and the satellite may include a relative speed relationship between the first communication apparatus and the satellite, a movement speed of the first communication apparatus, or the like. For example, if a movement speed of the terminal device is higher, the GNSS first validity duration may be shorter. Therefore, after completing GNSS measurement in the GNSS measurement gap, the first communication apparatus may determine the GNSS first validity duration. The first communication apparatus may maintain uplink synchronization in the GNSS first validity duration, and may communicate with a second communication apparatus.

In a possible implementation, the first communication apparatus may receive trigger information, and perform step 301 based on the trigger information. For example, the trigger information may be included in a medium access control control element (medium access control control element, MAC CE). Alternatively, the trigger information may be included in radio resource control (radio resource control, RRC) signaling and the like. The following uses an example in which the trigger information is included in the MAC CE for description.

For example, the second communication apparatus may aperiodically trigger the first communication apparatus to perform GNSS measurement. For example, the first communication apparatus may perform GNSS measurement in the GNSS measurement gap when receiving a medium access control control element (medium access control control element, MAC CE) from the second communication apparatus. In other words, before step 301, the second communication apparatus may send the MAC CE, and the first communication apparatus may receive the MAC CE. For example, the MAC CE may be used to trigger or schedule the first communication apparatus to perform GNSS measurement, or the MAC CE may be used to trigger or schedule the first communication apparatus to report the GNSS validity duration. For example, the MAC CE may include 1-bit trigger information, and a value 1 of the bit indicates to trigger the first communication apparatus to perform GNSS measurement.

For example, the second communication apparatus may send the MAC CE based on GNSS third validity duration of the first communication apparatus (for example, GNSS second validity duration that is most recently reported). In other words, before the GNSS second validity duration that is most recently reported by the first communication apparatus (that is, before a GNSS expires or before the GNSS validity period), the second communication apparatus may perform GNSS measurement scheduling by using MAC CE signaling. For example, after the first communication apparatus enters a connected state, the second communication apparatus may send the MAC CE based on the GNSS validity duration that has been reported by the first communication apparatus (that is, the GNSS third validity duration) and an uplink signal sent by the first communication apparatus, and trigger or schedule, by using the MAC CE, the first communication apparatus to perform GNSS measurement. For example, the second communication apparatus may detect, based on the GNSS third validity duration of the first communication apparatus, whether the GNSS information expires, and detect an uplink time deviation error of the first communication apparatus based on the uplink signal sent by the first communication apparatus. For example, in a last period of time of the GNSS third validity duration of the first communication apparatus, or in a case in which the uplink time deviation error is greater than an error threshold, the second communication apparatus may send the MAC CE. It may be understood that the GNSS second validity duration that is most recently reported in this embodiment of this application may be understood as GNSS second validity duration that is most recently indicated by using indication information. In other words, duration information reported by the first communication apparatus may be a difference, an index, the GNSS second validity duration, or the like. However, regardless of content in the duration information, the duration information is intended to indicate the GNSS second validity duration. Therefore, for ease of description, the method provided in this embodiment of this application is described by using the GNSS second validity duration that is most recently reported as an example.

Based on the foregoing information, the second communication apparatus may send the MAC CE to the first communication apparatus, so that the first communication apparatus performs GNSS measurement based on the MAC CE, and re-reports GNSS validity duration, to ensure validity of the GNSS information. In this way, it is ensured that the first communication apparatus can continue communicating with the second communication apparatus, and long-time communication of the first communication apparatus is implemented. For descriptions of the GNSS third validity duration, refer to step 302. Details are not described in advance herein.

For example, if a subframe (subframe) or a slot in which the first communication apparatus receives the MAC CE is n, start time (start time) (or referred to as a start time point) of the GNSS measurement gap may be n+X. For example, X may be a predefined value (predefined value), or a configured value (configured value) (for example, the MAC CE may include a value of X), or is related to a hybrid automatic repeat request (hybrid automatic repeat request, HARQ) feedback (HARQ feedback) of the MAC CE. A specific value of X is not limited in this embodiment of this application.

In an example, the duration for the GNSS measurement gap (the duration for the GNSS measurement gap) may be configured by a network device. For example, the MAC CE may include the duration. Alternatively, before the network device sends the MAC CE, the network device may send information indicating the duration. Correspondingly, the terminal device receives the information indicating the duration. In another example, the duration for the GNSS measurement gap may be reported by the terminal device to the network device based on a capability of the terminal device, and then the network device configures the duration by using the MAC CE. When the MAC CE does not include the duration for the GNSS measurement gap, the duration may be equal to duration that is most recently reported by the terminal device.

The foregoing descriptions of the start time point of the GNSS measurement gap and the duration for the GNSS measurement gap are merely examples, and should not be understood as a limitation on this embodiment of this application.

For example, the MAC CE may further include resource configuration information used by the first communication apparatus to report the duration information. Alternatively, the resource configuration information and the trigger information may be included in different signaling and the like. This is not limited in this embodiment of this application.

302: The first communication apparatus reports the duration information, and correspondingly, the second communication apparatus receives the duration information. The duration information indicates the GNSS second validity duration.

For example, before reporting the duration information, the first communication apparatus may further determine the GNSS second validity duration. For example, the GNSS second validity duration may be determined based on a reference time point. The reference time point is included in the GNSS measurement gap, or the reference time point is after the GNSS measurement gap. For example, the GNSS second validity duration may be determined based on the GNSS first validity duration and a reference time point. For example, the GNSS second validity duration may be determined based on a reference time point and the GNSS measurement gap (for example, an end point of the GNSS measurement gap). For example, the GNSS second validity duration may be alternatively determined based on a reference time point, the GNSS measurement gap, and the GNSS first validity duration. For a manner of determining the GNSS second validity duration, refer to the following descriptions. It may be understood that the GNSS first validity duration may be determined in the GNSS measurement gap, and whether the GNSS second validity duration is determined in the GNSS measurement gap is not limited in this embodiment of this application.

For example, the reference time point may be a time point in the GNSS measurement gap. For example, the reference time point may be the end time point of the GNSS measurement gap, or a time point other than the start time point and the end time point in the GNSS measurement gap. In an example, the reference time point may be a time point at which the first communication apparatus completes GNSS measurement in the GNSS measurement gap. When the reference time point is the time point at which the first communication apparatus completes GNSS measurement in the GNSS measurement gap, or is a time point (for example, the end time point of the GNSS measurement gap) that is in the GNSS measurement gap and that is after the time point at which GNSS measurement is completed, the GNSS second validity duration is less than the GNSS first validity duration. For another example, when the reference time point may alternatively be a time point (for example, the start time point of the GNSS measurement gap) that is in the GNSS measurement gap and that is before the time point at which GNSS measurement is completed, the GNSS second validity duration is greater than the GNSS first validity duration. Although the GNSS second validity duration is greater than the GNSS first validity duration, for the second communication apparatus, actual GNSS validity duration determined after the second communication apparatus receives the duration information may be equal to the GNSS first validity duration, or less than the GNSS first validity duration.

In another example, the reference time point may be a time point at which the first communication apparatus reports the duration information. Generally, there is a specific time difference between the time point at which the first communication apparatus completes GNSS measurement and the time point at which the first communication apparatus reports the duration information. When the time difference is in a specific range, the reference time point may be the time point at which the first communication apparatus completes GNSS measurement in the GNSS measurement gap, or the end time point of the GNSS measurement gap. When the time difference exceeds the foregoing specific range, the reference time point may be one of the end time point of the GNSS measurement gap of the first communication apparatus or the time point at which the first communication apparatus reports the duration information. For example, the time point at which the first communication apparatus reports the duration information may be after the GNSS measurement gap.

Due to a limited capability, UE stops communication and performs GNSS measurement in the GNSS measurement gap. However, the UE may actually start and complete measurement at any moment in the GNSS measurement gap. For example, because each terminal device has a different capability, time at which terminal devices complete GNSS measurement in the GNSS measurement gap is different. Therefore, to report the GNSS validity duration more accurately, the GNSS second validity duration reported by the terminal device may be less than or equal to the GNSS first validity duration. The terminal device reports the GNSS validity duration more accurately, to assist the network device in scheduling, within proper time next time, the terminal device to perform GNSS measurement.

It may be understood that for same GNSS first validity duration, if different terminal devices complete GNSS measurement at different time points, GNSS second validity duration reported by the different terminal devices is different. In other words, the GNSS first validity duration may not change. However, because the terminal devices complete GNSS measurement at different time points in the GNSS measurement gap, for a determined reference time point (for example, the end point of the measurement gap), the GNSS second validity duration reported by the terminal devices changes.

The following describes the manner of determining the GNSS second validity duration.

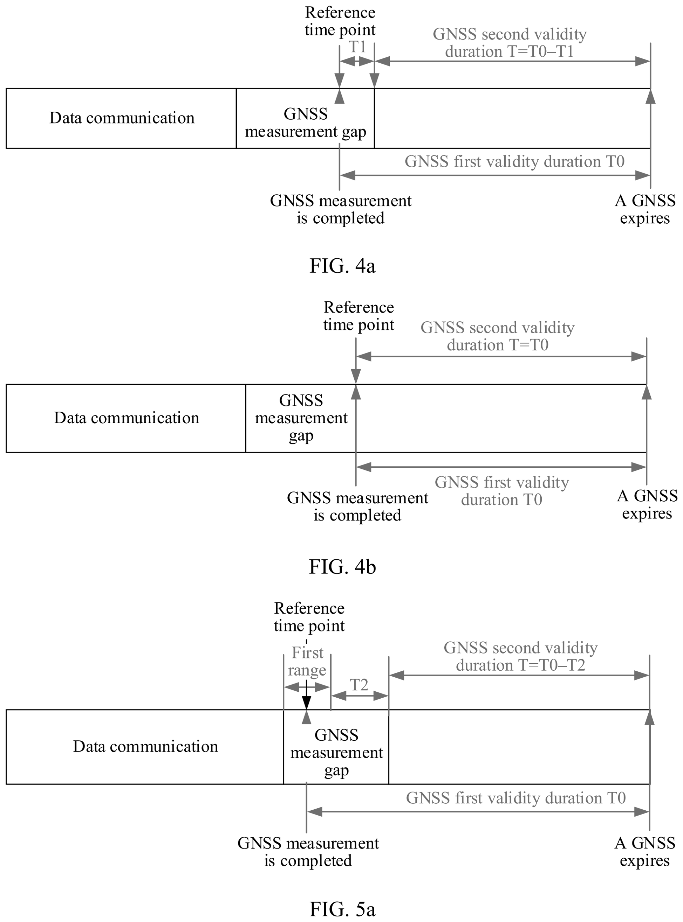

In an example, the GNSS second validity duration may be determined based on the GNSS first validity duration, the reference time point, and the end time point of the GNSS measurement gap. For example, the GNSS second validity duration T satisfies the following condition: T=T0-T1. T0 represents the GNSS first validity duration, and T1 represents duration between the reference time point and the end time point of the GNSS measurement gap. As shown in FIG. 4a and FIG. 4b, GNSS first validity duration in FIG. 4a is the same as that in FIG. 4b. However, in FIG. 4a, a reference time point is before an end time point of a GNSS measurement gap, in other words, duration between the reference time point and the end time point of the GNSS measurement gap is T1. In FIG. 4b, a reference time point is at an end time point of a GNSS measurement gap, in other words, duration between the reference time point and the end time point of the GNSS measurement gap is 0. The GNSS first validity duration T in FIG. 4a and FIG. 4b does not change. However, because the terminal devices complete GNSS measurement at different time points in the GNSS measurement gap, the GNSS second validity duration T reported by the terminal devices changes.

The GNSS second validity duration is determined based on the GNSS first validity duration, the reference time point, and the end time point of the GNSS measurement gap, so that flexibility of the GNSS second validity duration determined by the first communication apparatus can be effectively improved.

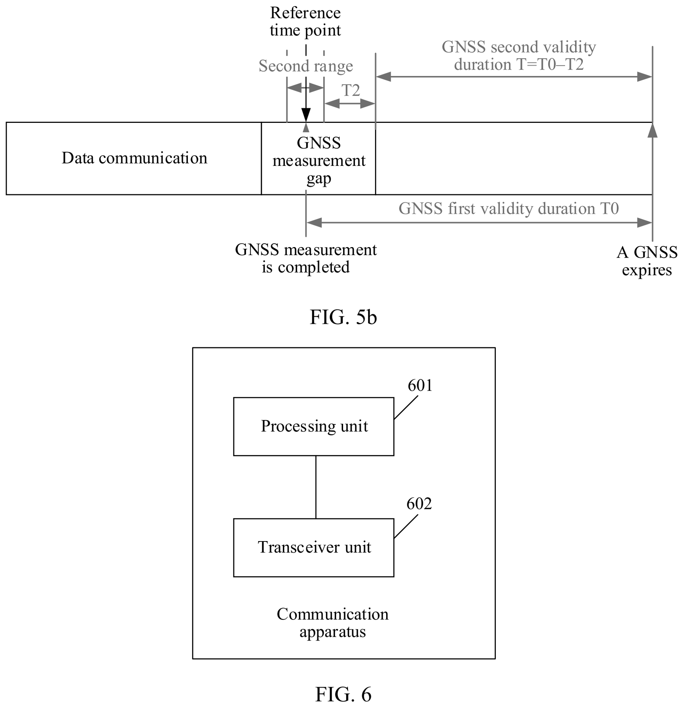

In another example, the GNSS second validity duration is determined based on a correspondence between the reference time point and an offset, and the GNSS first validity duration. Alternatively, the foregoing descriptions may be understood as that there may be a correspondence between the reference time point and the GNSS second validity duration, or the GNSS second validity duration may be determined based on a range that the reference time point is in and the GNSS first validity duration. For example, the GNSS measurement gap may include at least two ranges, for example, a first range and a second range. The first range may correspond to a first offset, and the second range may correspond to a second offset. When the reference time point is in the first range, the GNSS second validity duration may be determined based on the GNSS first validity duration and the first offset. For example, the GNSS second validity duration is equal to a difference between the GNSS first validity duration and the first offset. When the reference time point is in the second range, the GNSS second validity duration may be determined based on the GNSS first validity duration and the second offset. For example, the GNSS second validity duration may be equal to a difference between the GNSS first validity duration and the second offset. As shown in FIG. 5a and FIG. 5b, reference time points are in different ranges, and GNSS first validity duration is the same. However, because the reference time points are in different ranges, and offsets corresponding to the reference time points are different (in other words, duration T2 between end time points of the ranges that the reference time points are in and the end time point of the GNSS measurement gap is different), the GNSS second validity duration changes.

It may be understood that the at least two ranges corresponding to the GNSS measurement gap may be evenly divided ranges, or may be unevenly divided ranges. This is not limited in this embodiment of this application.

The GNSS second validity duration is determined based on the range that the reference time point is in and the GNSS first validity duration, so that the GNSS second validity duration determined by the first communication apparatus is simpler.

The following describes the duration information.

In a possible implementation, the duration information may include the GNSS second validity duration. Specific values of the GNSS second validity duration are not listed one by one in this embodiment of this application.

In another possible implementation, the duration information includes a difference between the GNSS second validity duration and the GNSS third validity duration.

In an example, the GNSS third validity duration may be GNSS initial validity duration. The GNSS initial validity duration may be understood as GNSS validity duration reported for a 1^{st} time when the terminal device enters the connected state from an idle state. Alternatively, the GNSS third validity duration may be understood as GNSS validity duration that needs to be reported by the terminal device in an initial access phase. In other words, the duration information may include a difference between the GNSS second validity duration and the GNSS initial validity duration. The second communication apparatus may determine the GNSS second validity duration based on the difference included in the duration information and the GNSS initial validity duration.

It may be understood that, in this example, the GNSS validity duration reported by the terminal device for the 1^{st} time may be the GNSS initial validity duration, for example, T0 shown in FIG. 4a or FIG. 4b, or T0 shown in FIG. 5a or FIG. 5b. In other words, the difference in the duration information may be differential duration between the GNSS validity duration reported for the 1^{st} time when the terminal device enters the connected state from the idle state and GNSS remaining validity duration that needs to be reported by the terminal device after the GNSS measurement gap. For example, GNSS validity duration (that is, GNSS initial validity duration) reported by the UE for a 1^{st} time is 10s, and GNSS remaining validity duration (that is, GNSS second validity duration) obtained by the UE through calculation based on a reference time point (for example, a time point at which GNSS measurement is completed), an end time point of a GNSS measurement gap, and GNSS first validity duration is 8s. In this case, a difference (which may also be referred to as differential GNSS remaining validity duration) reported by the UE is 2s. In comparison with direct reporting of 8s, a manner of reporting the difference can reduce signaling overheads.

It may be understood that the GNSS validity duration reported by the terminal device for the 1^{st} time may alternatively be the GNSS remaining validity duration, in other words, the GNSS third validity duration may alternatively be the GNSS remaining validity duration reported by the terminal device for the 1^{st} time. Generally, the GNSS initial validity duration (or the GNSS remaining validity duration) reported by the terminal device for the 1^{st} time may not need to be triggered by the network device by using the trigger information. For example, the terminal device may determine the GNSS initial validity duration (or the GNSS remaining validity duration) before initiating random access, to report the GNSS initial validity duration (or the GNSS remaining validity duration) after the terminal device enters the connected state. For example, because the terminal device may perform GNSS measurement for a 1^{st} time not in the GNSS measurement gap, the GNSS initial validity duration may be equal to the GNSS remaining validity duration.

In another example, the GNSS third validity duration may be the GNSS second validity duration that is most recently reported (that is, the GNSS second validity duration that is most recently indicated by using the duration information). For example, when the GNSS second validity duration reported in step 302 is GNSS remaining validity duration reported by the first communication apparatus for an N^{th} time, the GNSS third validity duration may be GNSS remaining validity duration reported for an (N-1)^{th} time. The GNSS remaining validity duration at the (N-1)^{th} time is determined based on GNSS first validity duration corresponding to the (N-1)^{th} time and a reference time point corresponding to the (N-1)^{th} time. N is an integer greater than or equal to 2. For example, N=2. To be specific, the GNSS third validity duration is the GNSS remaining validity duration reported for the 1^{st} time. It may be understood that, in this example, the GNSS validity duration reported by the terminal device for the 1^{st} time may be the GNSS remaining validity duration determined based on the GNSS initial validity duration and the reference time point. For another example, N may be greater than 2. To be specific, the duration information includes a difference between the GNSS remaining validity duration reported for the (N-1)^{th} time (that is, GNSS second validity duration indicated by using duration information reported for the (N-1)^{th} time) and the GNSS remaining validity duration reported for the N^{th} time (that is, GNSS second validity duration indicated by using duration information reported for the N^{th} time).

In this embodiment of this application, the second communication apparatus may determine the GNSS second validity duration based on the difference included in the duration information and the GNSS second validity duration that is most recently reported by the first communication apparatus. For example, the second communication apparatus may determine the GNSS second validity duration at the N^{th} time based on a difference in the duration information reported for the N^{th} time, a difference in the duration information reported for the (N-1)^{th} time to a difference in duration information reported for a 2^{nd} time, and the GNSS remaining validity duration reported for the 1^{st} time (or the GNSS initial validity duration reported for the 1^{st} time).

For example, the GNSS validity duration reported by the UE for the 1^{st} time is 10s, GNSS measurement is performed for a 2^{nd} time, and GNSS remaining validity duration (that is, GNSS second validity duration corresponding to the 2^{nd} time) obtained by the UE through calculation based on an end time point of a GNSS measurement gap, a reference time point, and GNSS first validity duration that correspond to the 2^{nd} time is 8s. In this case, the difference reported by the UE may be 2s. GNSS measurement is performed for a 3^{rd} time, and GNSS remaining validity duration (that is, GNSS second validity duration corresponding to the 3^{rd} time) obtained by the UE through calculation based on an end time point of a GNSS measurement gap, a reference time point, and GNSS first validity duration that correspond to the 3^{rd} time is 9s. In this case, the difference reported by the UE is 1s. The GNSS second validity duration is reported in a difference manner, so that the signaling overheads can be effectively reduced.

It may be understood that the GNSS third validity duration may be the GNSS second validity duration reported for the (N-1)^{th} time, or may be GNSS second validity duration reported for an (N-2)^{th} time, or the like. This is not limited in this embodiment of this application.

In still another example, the GNSS third validity duration may be GNSS validity duration broadcast or unicast by the network device. Alternatively, the GNSS third validity duration may be one piece of GNSS validity duration in some GNSS validity duration defined in a protocol. Therefore, the GNSS validity duration reported by the terminal device for the 1^{st} time may alternatively be a difference between the GNSS initial validity duration and the GNSS third validity duration, a difference between GNSS remaining validity duration of the GNSS initial validity duration and the GNSS third validity duration, an index of a difference between the GNSS initial validity duration and the GNSS third validity duration, or the like.

For example, the terminal device may determine, based on duration in which the terminal device is in the idle state, a manner of reporting the GNSS validity duration for the 1^{st} time. For example, if the duration in which the terminal device is in the idle state is less than a threshold (or less than or equal to a threshold), the GNSS validity duration reported for the 1^{st} time when the terminal device re-enters the connected state may be a difference between the GNSS second validity duration that is most recently indicated by the terminal device by using the duration information (that is, GNSS second validity duration indicated by using the duration information last time before the terminal device enters the idle state) and the GNSS initial validity duration, or an index of the difference. For example, the terminal device enters the idle state due to events such as a beam detection failure. In this case, the duration in which the terminal device is in the idle state may be less than the foregoing threshold. Reasons why the terminal device enters the idle state are not listed one by one in this embodiment of this application. For another example, if the duration in which the terminal device is in the idle state is greater than or equal to the threshold (or greater than the threshold), the GNSS validity duration reported for the 1^{st} time when the terminal device re-enters the connected state may be the GNSS initial validity duration, the GNSS remaining validity duration, or the like. The foregoing listed manner of determining, based on the duration in which the terminal device is in the idle state, the GNSS validity duration reported for the 1^{st} time is merely an example. During specific implementation, a manner of determining the GNSS validity duration reported by the terminal device for the 1^{st} time may alternatively be determined based on another principle. Details are not described herein one by one.

It may be understood that, in addition to the difference, the duration information may also include indication information of a sign bit, and the indication information of the sign bit may indicate values of the GNSS second validity duration and the GNSS third validity duration.

In still another possible implementation, the duration information includes an index (which may also be referred to as an index value) of the GNSS second validity duration. For example, the GNSS second validity duration may correspond to the index value. A relationship between the index value and the GNSS second validity duration may be defined in a protocol, may be configured by the network device, or the like. This is not limited in this embodiment of this application. Therefore, the second communication apparatus may determine the GNSS second validity duration based on an index included in the duration information reported for the N^{th} time.

In still another possible implementation, the duration information may include an index of a difference between the GNSS second validity duration and the GNSS third validity duration. Therefore, the second communication apparatus may determine the GNSS second validity duration at the N^{th} time based on the index in the duration information reported for the N^{th} time, an index in the duration information reported for the (N-1)^{th} time to an index in the duration information reported for the 2^{nd} time, and GNSS remaining validity duration reported for the 1^{st} time (or the GNSS initial validity duration reported for the 1^{st} time). For example, a plurality of differences (which may also be referred to as candidate differential GNSS remaining validity duration) may be agreed on in a protocol, for example, 10s, 1s, 2s, 3s, 4s, 6s, 8s, 10s, 15s, 20s, 30s, 40s, 1 min, 2 min, 3 min, 5 min, 10 min, 20 min, 40 min}. Each difference may correspond to one index value. Therefore, the UE may report the index of the difference in the duration information, and the network device may determine, based on the index, actual GNSS remaining validity duration of the UE after ending of the GNSS measurement gap. For descriptions of the GNSS third validity duration in this implementation, refer to the foregoing descriptions. Details are not described herein again.

It may be understood that, in an example, the difference may include 0, and 0 may indicate that the GNSS remaining validity duration of the UE does not change. In other words, the GNSS second validity duration indicated by using the duration information reported for the N^{th} time is the same as the GNSS second validity duration indicated by using the duration information reported for the (N-1)^{th} time. In another example, the difference may not include 0. For example, when the GNSS remaining validity duration does not change, the terminal device may directly communicate with the network device, to indicate to the network device that the GNSS second validity duration reported by the terminal device for the N^{th} time is the same as the GNSS second validity duration reported by the terminal device for the (N-1)^{th} time. In still another example, the difference may include an upper limit of a duration threshold. When the difference corresponding to the index included in the duration information is the upper limit of the duration threshold, it may indicate that the GNSS measurement of the first communication apparatus fails. A specific value of the upper limit of the duration threshold is not limited in this embodiment of this application. In still another example, when the index included in the duration information exceeds a range defined in a protocol, it may indicate that the GNSS measurement of the first communication apparatus fails. In still another example, when a resource used to report the duration information is dynamically scheduled, and the network device does not receive the duration information on a resource scheduled by the network device, the network device may determine that the GNSS measurement of the terminal device fails. In still another example, when a resource used to report the duration information is a preconfigured uplink resource, for example, a semi-persistent scheduling (semi-persistent scheduling, SPS) resource, a preconfigured uplink resource (preconfigured uplink resource, PUR), or a PRACH resource, two communication parties may define a time window or define a set of a specific quantity of SPS/PUR/PRACH resources. If the network device does not receive, in the time window or on the set of the specific quantity of resources, the duration information reported by the terminal device, the network device may consider that the GNSS measurement of the terminal device fails. Therefore, the terminal device may be out of synchronization in uplink, and the network device may trigger the terminal device to perform random access again. It is clear that the first communication apparatus may alternatively indicate, by using other information or in another manner, that the GNSS measurement fails. Details are not described herein one by one.

For example, the duration information may be included in a MAC CE, or may be included in physical layer data. Specific signaling of the duration information is not limited in this embodiment of this application. For example, the terminal device may include the duration information in a physical random access channel (physical random access channel, PRACH), a physical uplink shared channel (physical uplink shared channel, PUSCH), or a physical uplink control channel (physical uplink control channel, PUCCH). For example, the resource used to report the duration information may be a dynamically scheduled resource, a semi-persistent resource, a PRACH resource, or the like. A channel or a resource used to report the duration information is not limited in this embodiment of this application.

303: The second communication apparatus determines the GNSS second validity duration based on the duration information.

For specific descriptions of step 303, refer to step 302. Details are not described herein again. For example, when the duration information includes the difference, the second communication apparatus may determine the GNSS second validity duration based on the difference and the GNSS third validity duration. For example, if the duration information includes the index of the GNSS second validity duration, the second communication apparatus may determine the GNSS second validity duration based on a relationship between the GNSS second validity duration and the index, and the index included in the duration information. For example, if the duration information includes the index of the difference between the GNSS second validity duration and the GNSS third validity duration, the second communication apparatus may determine the GNSS second validity duration at the N^{th} time based on the index included in the duration information reported for the N^{th} time, the index included in the duration information reported for the (N-1)^{th} time, and the GNSS remaining validity duration reported for the 1^{st} time (or the GNSS initial validity duration reported for the 1^{st} time).

In this embodiment of this application, the first communication apparatus determines the GNSS second validity duration based on the reference time point, to report the GNSS second validity duration, so that the first communication apparatus can report the GNSS validity duration in the GNSS validity period, it is ensured that the first communication apparatus can continue communicating with the second communication apparatus in the GNSS validity period, and long-time communication is implemented.

It may be understood that a name of the duration information is merely an example, and the duration information should not be understood as a limitation on this embodiment of this application. For example, the duration information may also be referred to as auxiliary information.

The GNSS first validity duration described in the foregoing example may be "infinity". In the foregoing descriptions, when obtaining the GNSS information, the first communication apparatus may obtain the GNSS validity duration, for example, the GNSS first validity duration, based on a speed relationship of the first communication apparatus and the like. Therefore, for a terminal device that does not move, or a terminal device whose movement speed is low, for example, a terminal device whose movement speed is less than a threshold, GNSS information of the terminal device may be always valid. Therefore, the GNSS validity duration may be infinity. That the movement speed of the terminal device is low includes but is not limited to the following examples: For a user in a walking state, the movement speed of the terminal device is 1 to 3 meters/second (m/s); for a user in a running state, the movement speed of the terminal device may be 10 kilometers/hour (km/h); or for a vehicle in a running state, the movement speed of the terminal device may be 30 km/h to 60 km/h. For another example, a movement speed of a terminal device in a slow state relative to a satellite may also be understood as a low speed.

Implementing long-time communication shown above may include maintaining the connected state for a long time.

The following describes communication apparatuses provided in embodiments of this application.

In this application, the communication apparatus is divided into functional modules based on the foregoing method embodiments. For example, each functional module may be obtained through division based on each corresponding function, or two or more functions may be integrated into one processing module. The integrated module may be implemented in a form of hardware, or may be implemented in a form of a software functional module. It should be noted that, in this application, division into the modules is an example, and is merely logical function division. During actual implementation, another division manner may be used. The following describes in detail communication apparatuses in embodiments of this application with reference to FIG. 6 to FIG. 8.

FIG. 6 is a diagram of a structure of a communication apparatus according to an embodiment of this application. As shown in FIG. 6, the communication apparatus includes a processing unit 601 and a transceiver unit 602. The transceiver unit 602 may implement a corresponding communication function, and the processing unit 601 is configured to perform data processing. For example, the transceiver unit 602 may also be referred to as an interface, a communication interface, a communication unit, or the like.

In some embodiments of this application, the communication apparatus may be configured to perform actions performed by the terminal device in the foregoing method embodiments. In this case, the communication apparatus may be a terminal device or a component (for example, a chip, a system, or a functional module) that may be configured in the terminal device. The transceiver unit 602 is configured to perform operations related to receiving and sending of the terminal device in the foregoing method embodiments. The processing unit 601 is configured to perform a processing related operation of the terminal device in the foregoing method embodiments.

For example, the processing unit 601 is configured to determine GNSS second validity duration.

The transceiver unit 602 is configured to report or output duration information.

For example, the processing unit 601 is further configured to determine GNSS first validity duration.

For example, the transceiver unit 602 is further configured to input or receive trigger information.

FIG. 6 is reused. In some other embodiments of this application, the communication apparatus may be configured to perform actions performed by the network device in the foregoing method embodiments. In this case, the communication apparatus may be a network device or a component (for example, a chip, a system, or a functional module) that may be configured in the network device. The transceiver unit 602 is configured to perform operations related to receiving and sending of the network device in the foregoing method embodiments. The processing unit 601 is configured to perform a processing related operation of the network device in the foregoing method embodiments.

For example, the transceiver unit 602 is configured to input or receive duration information.

The processing unit 601 is configured to determine GNSS second validity duration based on the duration information.

The transceiver unit 602 is further configured to output or send trigger information.

Optionally, in the foregoing embodiments, the communication apparatus may further include a storage unit. The storage unit may be configured to store instructions and/or data. The processing unit 601 may read the instructions and/or data in the storage unit, to enable the communication apparatus to implement the foregoing method embodiments. For example, the storage unit may be configured to store GNSS initial validity duration, a difference, an index, and the like.

In the foregoing embodiments, for descriptions of the GNSS first validity duration, the GNSS second validity duration, the GNSS initial validity duration, a reference time point, a GNSS measurement gap, GNSS third validity duration, and the like, refer to the descriptions in the foregoing method embodiments. Details are not described herein again.

It may be understood that specific descriptions of the transceiver unit and the processing unit shown in the foregoing embodiments are merely examples. For specific functions, steps, or the like performed by the transceiver unit and the processing unit, refer to the foregoing method embodiments. Details are not described herein again.

The foregoing describes the communication apparatus in this embodiment of this application. The following describes a possible product form of the communication apparatus. It should be understood that a product in any form that has a function of the communication apparatus in FIG. 6 falls within the protection scope of embodiments of this application. It should be further understood that the following descriptions are merely examples, and do not limit the product form of the communication apparatus in embodiments of this application.

In a possible implementation, in the communication apparatus shown in FIG. 6, the processing unit 601 may be one or more processors, and the transceiver unit 602 may be a transceiver, or the transceiver unit 602 may include a sending unit and a receiving unit. The sending unit may be a transmitter, the receiving unit may be a receiver, and the sending unit and the receiving unit are integrated into one device, for example, a transceiver. In this embodiment of this application, the processor and the transceiver may be coupled, or the like. A manner of connection between the processor and the transceiver is not limited in this embodiment of this application. In a process of performing the foregoing method, a process of sending information in the foregoing method may be understood as a process of outputting the information by the processor. When outputting the information, the processor outputs the information to the transceiver, so that the transceiver transmits the information. After the information is output by the processor, other processing may further need to be performed on the information before the information arrives at the transceiver. Similarly, a process of receiving information in the foregoing method may be understood as a process of receiving the input information by the processor. When the processor receives the input information, the transceiver receives the information, and inputs the information into the processor. Further, after the transceiver receives the information, other processing may need to be performed on the information before the information is input into the processor.

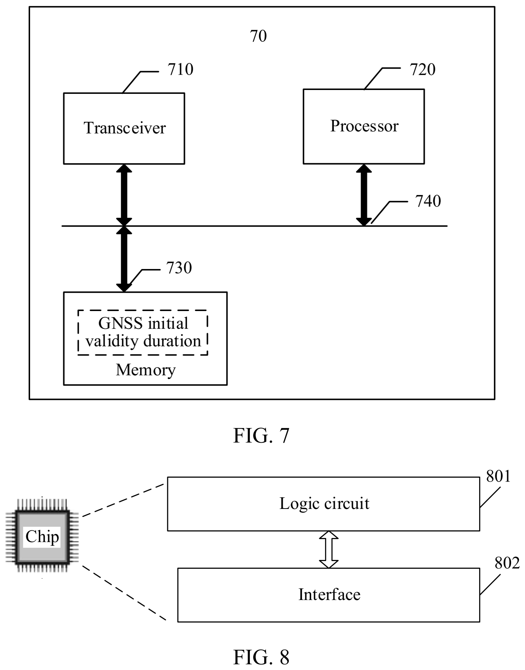

As shown in FIG. 7, a communication apparatus 70 includes one or more processors 720 and a transceiver 710.

For example, when the communication apparatus is configured to perform the steps, methods, or functions performed by the first communication apparatus or the terminal device, the processor 720 is configured to determine GNSS second validity duration; and the transceiver 710 is configured to output or report (which may also be referred to as sending) duration information.

For example, the processor 720 is further configured to determine GNSS first validity duration.

For example, the transceiver 710 is further configured to receive trigger information.

For example, when the communication apparatus is configured to perform the steps, methods, or functions performed by the second communication apparatus or the network device, for example, the transceiver 710 is configured to receive duration information; and the processor 720 is further configured to determine GNSS second validity duration based on the duration information.

For example, the transceiver 710 is further configured to send trigger information.

In the foregoing embodiments, for descriptions of the GNSS first validity duration, the GNSS second validity duration, GNSS initial validity duration, a reference time point, a GNSS measurement gap, GNSS third validity duration, and the like, refer to the descriptions in the foregoing method embodiments. Details are not described herein again. It may be understood that for specific descriptions of the processor and the transceiver, refer to descriptions of the processing unit and the transceiver unit shown in FIG. 6. Details are not described herein again.

In each implementation of the communication apparatus shown in FIG. 7, the transceiver may include a receiver and a transmitter. The receiver is configured to perform a receiving function (or operation), and the transmitter is configured to perform a transmitting function (or operation). The transceiver is configured to communicate with another device/apparatus through a transmission medium.

Optionally, the communication apparatus 70 may further include one or more memories 730, configured to store program instructions and/or data. The memory 730 is coupled to the processor 720. The coupling in this embodiment of this application may be an indirect coupling or a communication connection between apparatuses, units, or modules in an electrical form, a mechanical form, or another form, and is used for information exchange between the apparatuses, units, or modules. The processor 720 may operate in collaboration with the memory 730. The processor 720 may execute the program instructions stored in the memory 730. Optionally, at least one of the one or more memories may be included in the processor. In this embodiment of this application, the memory 730 may store the GNSS initial validity duration, a difference, an index, and the like. For example, the memory shown in FIG. 7 shows only the GNSS initial validity duration as an example.

A specific connection medium between the transceiver 710, the processor 720, and the memory 730 is not limited in this embodiment of this application. In this embodiment of this application, in FIG. 7, the memory 730, the processor 720, and the transceiver 710 are connected through a bus 740. The bus is represented by using a bold line in FIG. 7. A connection manner between other components is merely an example for description, and is not limited thereto. The bus may be classified into an address bus, a data bus, a control bus, and the like. For ease of representation, only one bold line is used for representation in FIG. 7, but it does not indicate that there is only one bus or only one type of bus.

In this embodiment of this application, the processor may be a general-purpose processor, a digital signal processor, an application-specific integrated circuit, a field programmable gate array or another programmable logic device, a discrete gate or transistor logic device, a discrete hardware component, or the like, and may implement or perform the methods, steps, and logical block diagrams disclosed in embodiments of this application. The general-purpose processor may be a microprocessor or any conventional processor or the like. The steps of the methods disclosed in combination with embodiments of this application may be directly performed and completed by a hardware processor, or may be performed and completed by a combination of hardware and software modules in the processor, or the like.

In this embodiment of this application, the memory may include but is not limited to a non-volatile memory, for example, a hard disk drive (hard disk drive, HDD) or a solid-state drive (solid-state drive, SSD), a random access memory (Random Access Memory, RAM), an erasable programmable read-only memory (Erasable Programmable ROM, EPROM), a read-only memory (Read-Only Memory, ROM), a portable read-only memory (Compact Disc Read-Only Memory, CD-ROM), or the like. The memory is any storage medium that can be used to carry or store program code in a form of instructions or a data structure and that can be read and/or written by a computer (for example, the communication apparatus shown in this application). However, this is not limited thereto. The memory in this embodiment of this application may alternatively be a circuit or any other apparatus that can implement a storage function, and is configured to store the program instructions and/or the data.

The processor 720 is mainly configured to: process a communication protocol and communication data, control the entire communication apparatus, execute a software program, and process data of the software program. The memory 730 is mainly configured to store the software program and the data. The transceiver 710 may include a control circuit and an antenna. The control circuit is mainly configured to convert a baseband signal and a radio frequency signal and process the radio frequency signal. The antenna is mainly configured to receive and send a radio frequency signal in a form of an electromagnetic wave. An input/output apparatus, for example, a touchscreen, a display, or a keyboard, is mainly configured to receive data input by a user and output data to the user.

After the communication apparatus is powered on, the processor 720 may read the software program in the memory 730, interpret and execute instructions of the software program, and process the data of the software program. When data needs to be sent in a wireless manner, the processor 720 performs baseband processing on to-be-sent data, and then outputs a baseband signal to a radio frequency circuit. The radio frequency circuit performs radio frequency processing on the baseband signal, and then sends a radio frequency signal to the outside in the form of the electromagnetic wave through the antenna. When data is sent to the communication apparatus, the radio frequency circuit receives a radio frequency signal through the antenna, converts the radio frequency signal into a baseband signal, and outputs the baseband signal to the processor 720. The processor 720 converts the baseband signal into data and processes the data.

In another implementation, the radio frequency circuit and the antenna may be disposed independent of the processor that performs baseband processing. For example, in a distributed scenario, the radio frequency circuit and the antenna may be disposed remotely and independent of the communication apparatus.

It may be understood that the communication apparatus shown in this embodiment of this application may alternatively include more components than those shown in FIG. 7, or the like. This is not limited in this embodiment of this application. The foregoing methods performed by the processor and the transceiver are merely examples. For specific steps performed by the processor and the transceiver, refer to the methods described above.

In another possible implementation, in the communication apparatus shown in FIG. 6, the processing unit 601 may be one or more logic circuits, and the transceiver unit 602 may be an input/output interface, or may be referred to as a communication interface, an interface circuit, an interface, or the like. Alternatively, the transceiver unit 602 may include a sending unit and a receiving unit. The sending unit may be an output interface, and the receiving unit may be an input interface. The sending unit and the receiving unit are integrated into one unit, for example, an input/output interface. As shown in FIG. 8, a communication apparatus shown in FIG. 8 includes a logic circuit 801 and an interface 802. The processing unit 601 may be implemented through the logic circuit 801, and the transceiver unit 602 may be implemented through the interface 802. The logic circuit 801 may be a chip, a processing circuit, an integrated circuit, a system on chip (system on chip, SoC), or the like. The interface 802 may be a communication interface, an input/output interface, a pin, or the like. For example, FIG. 8 is an example in which the foregoing communication apparatus is a chip. The chip includes the logic circuit 801 and the interface 802.

In this embodiment of this application, the logic circuit and the interface may be coupled to each other. A specific connection manner of the logic circuit and the interface is not limited in this embodiment of this application.

For example, when the communication apparatus is configured to perform the methods, functions, or steps performed by the first communication apparatus or the terminal device, the logic circuit 801 is configured to determine GNSS second validity duration; and the interface 802 is configured to output duration information.

For example, the logic circuit 801 is further configured to determine GNSS first validity duration.

For example, the interface 802 is further configured to input trigger information.

For example, when the communication apparatus is configured to perform the methods, functions, or steps performed by the second communication apparatus or the network device, for example, the interface 802 is configured to input duration information; and the logic circuit 801 is configured to determine GNSS second validity duration based on the duration information.

For example, the interface 802 is further configured to output trigger information.

For example, the chip shown in FIG. 8 may further include a memory. The memory may be configured to store GNSS initial validity duration, a difference, an index, and the like.

It may be understood that the communication apparatus shown in this embodiment of this application may implement the methods provided in embodiments of this application in a form of hardware, or may implement the methods provided in embodiments of this application in a form of software. This is not limited in this embodiment of this application.

In the foregoing embodiments, for descriptions of the GNSS first validity duration, the GNSS second validity duration, the GNSS initial validity duration, a reference time point, a GNSS measurement gap, GNSS third validity duration, and the like, refer to the descriptions in the foregoing method embodiments. Details are not described herein again.

For specific implementations of embodiments shown in FIG. 8, refer to the foregoing embodiments. Details are not described herein again.

An embodiment of this application further provides a wireless communication system. The wireless communication system includes a first communication apparatus and a second communication apparatus. The first communication apparatus and the second communication apparatus may be configured to perform the method in any one of the foregoing embodiments.

In addition, this application further provides a computer program. The computer program is used to implement operations and/or processing performed by the first communication apparatus device in the methods provided in this application.

This application further provides a computer program. The computer program is used to implement operations and/or processing performed by the second communication apparatus device in the methods provided in this application.

This application further provides a computer-readable storage medium. The computer-readable storage medium stores computer code. When the computer code is run on a computer, the computer is enabled to perform operations and/or processing performed by the first communication apparatus device in the methods provided in this application.

This application further provides a computer-readable storage medium. The computer-readable storage medium stores computer code. When the computer code is run on a computer, the computer is enabled to perform operations and/or processing performed by the second communication apparatus device in the methods provided in this application.

This application further provides a computer program product. The computer program product includes computer code or a computer program. When the computer code or the computer program is run on a computer, operations and/or processing performed by the first communication apparatus device in the methods provided in this application are/is performed.

This application further provides a computer program product. The computer program product includes computer code or a computer program. When the computer code or the computer program is run on a computer, operations and/or processing performed by the second communication apparatus device in the methods provided in this application are/is performed.

In several embodiments provided in this application, it should be understood that the disclosed systems, apparatuses, and methods may be implemented in other manners. For example, the described apparatus embodiments are merely examples. For example, division into the units is merely logical function division. During actual implementation, there may be another division manner. For example, a plurality of units or components may be combined or integrated into another system, or some features may be ignored or not performed. In addition, the displayed or discussed mutual couplings or direct couplings or communication connections may be implemented through some interfaces. Indirect couplings or communication connections between the apparatuses or units may be implemented in electrical, mechanical, or other forms of connection.

The units described as separate parts may or may not be physically separate, and parts displayed as units may or may not be physical units, may be located in one position, or may be distributed on a plurality of network units. Some or all of the units may be selected based on an actual requirement to achieve technical effects of the solutions provided in embodiments of this application.

In addition, functional units in embodiments of this application may be integrated into one processing unit, each of the units may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to a conventional technology, or all or some of the technical solutions may be implemented in a form of a software product. The computer software product is stored in a readable storage medium and includes several instructions for instructing a computer device (which may be a personal computer, a server, a network device, or the like) to perform all or some of the steps of the methods described in embodiments of this application. The readable storage medium includes any medium that can store program code, for example, a USB flash drive, a removable hard disk drive, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A satellite communication method, wherein the method is applied to a first communication apparatus, and the method comprises:
determining GNSS second validity duration of the first communication apparatus; and
reporting duration information, wherein the duration information indicates the GNSS second validity duration, the GNSS second validity duration is determined based on a reference time point, and the reference time point is comprised in a GNSS measurement gap, or the reference time point is after the GNSS measurement gap.

2. The method according to claim 1, wherein the determining the GNSS second validity duration of the first communication apparatus comprises:
determining GNSS first validity duration of the first communication apparatus in the GNSS measurement gap, and determining the GNSS second validity duration based on the GNSS first validity duration and the reference time point, wherein the GNSS second validity duration is less than the GNSS first validity duration.

3. The method according to claim 1 or 2, wherein the GNSS second validity duration is determined based on the reference time point and an end time point of the GNSS measurement gap; or
the GNSS second validity duration is determined based on the GNSS first validity duration, the reference time point, and an end time point of the GNSS measurement gap.

4. The method according to claim 3, wherein the GNSS second validity duration T satisfies the following condition: T=T0-T1, wherein T0 represents the GNSS first validity duration, and T1 represents duration between the reference time point and the end time point of the GNSS measurement gap.

5. The method according to any one of claims 1 to 4, wherein the duration information comprises a difference between the GNSS second validity duration and GNSS third validity duration; or
an index of the GNSS second validity duration, or an index of a difference between the GNSS second validity duration and GNSS third validity duration.

6. The method according to claim 5, wherein the GNSS third validity duration comprises GNSS initial validity duration, or GNSS second validity duration that is most recently indicated by using the duration information.

7. The method according to any one of claims 1 to 6, wherein the reference time point is a time point at which the first communication apparatus completes GNSS measurement in the GNSS measurement gap.

8. The method according to any one of claims 1 to 7, wherein the determining the GNSS second validity duration of the first communication apparatus comprises:
receiving trigger information, and determining the GNSS second validity duration of the first communication apparatus in the GNSS measurement gap based on the trigger information.

9. A satellite communication method, wherein the method is applied to a second communication apparatus, and the method comprises:
receiving duration information, wherein the duration information indicates global navigation satellite system GNSS second validity duration of a first communication apparatus, the GNSS second validity duration is determined based on a reference time point, and the reference time point is comprised in a GNSS measurement gap, or the reference time point is after the GNSS measurement gap; and
determining the GNSS second validity duration based on the duration information.

10. The method according to claim 9, wherein the GNSS second validity duration is determined based on GNSS first validity duration and the reference time point, and the GNSS second validity duration is less than the GNSS first validity duration.

11. The method according to claim 9 or 10, wherein the GNSS second validity duration is determined based on the reference time point and an end time point of the GNSS measurement gap; or
the GNSS second validity duration is determined based on the GNSS first validity duration, the reference time point, and an end time point of the GNSS measurement gap.

12. The method according to claim 11, wherein the GNSS second validity duration T satisfies the following condition: T=T0-T1, wherein T0 represents the GNSS first validity duration, and T1 represents duration between the reference time point and the end time point of the GNSS measurement gap.

13. The method according to any one of claims 9 to 12, wherein the duration information comprises a difference between the GNSS second validity duration and GNSS third validity duration, an index of the GNSS second validity duration, or an index of a difference between the GNSS second validity duration and GNSS third validity duration.

14. The method according to claim 13, wherein the GNSS third validity duration comprises GNSS initial validity duration, or GNSS second validity duration that is most recently indicated by using the duration information.

15. The method according to any one of claims 9 to 14, wherein the reference time point is a time point at which the first communication apparatus completes GNSS measurement in the GNSS measurement gap.

16. The method according to any one of claims 9 to 15, wherein before the receiving the duration information, the method further comprises:
sending trigger information based on the GNSS second validity duration that is most recently indicated by the first communication apparatus by using the duration information.

17. A communication apparatus, comprising a unit configured to perform the method according to any one of claims 1 to 16.

18. A communication apparatus, comprising a processor, wherein the processor is configured to perform the method according to any one of claims 1 to 16.

19. The communication apparatus according to claim 18, wherein the communication apparatus is a chip.

20. A communication apparatus, comprising a logic circuit and an interface, wherein the logic circuit is coupled to the interface; and
the interface is configured to input and/or output information, and the logic circuit is configured to perform the method according to any one of claims 1 to 16.

21. A computer-readable storage medium, wherein the computer-readable storage medium is configured to store a computer program, and when the computer program is executed, the method according to any one of claims 1 to 16 is performed.

22. A computer program product, wherein the computer program product comprises a computer program, and when the computer program is executed, the method according to any one of claims 1 to 16 is performed.

23. A communication system, comprising a first communication apparatus and a second communication apparatus, wherein the first communication apparatus is configured to perform the method according to any one of claims 1 to 8, and the second communication apparatus is configured to perform the method according to any one of claims 9 to 16.
